# EUROPEAN PATENT APPLICATION

(11) **EP 2 025 235 A1**
(43) Date of publication of application: **18.02.2009**
(21) Application number: 07113976.0
(22) Date of filing: 08.08.2007
(51) Int. Cl.: A23C 9/152, A23J 3/00, A23L 2/00, C12P 21/00

(54) **Use of globular protein - oligosaccharide conjugates**

(71) Applicant: Stichting Top Institute Food and Nutrition, 6709 PA Wageningen (NL)
(72) Inventor: de Jongh, Harmen Henri Jacobus, 3705 LG, Zeist (NL)
(74) Representative: van Westenbrugge, Andries

(57) **Abstract**

The invention pertains to the use of globular protein-oligosaccharide conjugates for foam initiation in a foodstuff, wherein the globular protein is glycosylated with an oligosaccharide containing at least three monosaccharide units. Remarkably, the effect is limited to these glycosylated globular proteins only, while those involving a mono- or disaccharide appear to be unsuitable to function as foam initiator only. It is the inventors' findings that the conjugates of the invention form a first interfacial layer which then allows other, conventional surfactants to stabilize a foam by displacement of the invention from the interface.

## Description

### FIELD OF THE INVENTION

The invention pertains to conjugates of globular proteins glycosylated with oligosaccharides containing at least three saccharide units.

### BACKGROUND OF THE INVENTION

So far, foam formation has always been linked to the surface energy of the system. The high mixing energy barrier between liquids such as water and air prevents them from spontaneously mixing to form a foam. To make a foam, the liquid's surface tension must be lowered by a third component (a foamer) that accumulates at the interface. Hence, a suitable foamer has always been one that reduces the thermodynamic surface tension of an air-liquid interface.

WO-06/036059 discloses a creamer comprising a fat and a protein-carbohydrate polymer conjugate as an emulsifier or anti-separation unit, wherein the carbohydrate polymer is built up from at least three monosaccharide units. The conjugate provides the creamer with a very good stability, and makes it thus suitable for use in coffee or tea, or in acids foods such as tomato soup. No mention of foam formation is made.

WO-A-00/18429 describes a whey protein glycated with a reducing sugar, and the use of such glycated whey protein to enhance all kinds of functional properties of a stored dairy powder incorporating such conjugates. While various possible candidates for the reducing sugar are listed, the focus is on promoting heat stability of an acid beverage formulation and improving emulsification in a low-fat salad dressing using lactosylated whey proteins.

### SUMMARY OF THE INVENTION

It is a primary object of the invention to provide a further use of conjugates of globular proteins and oligosaccharides.

The inventors have found a new use for conjugates of globular proteins and oligosaccharides having a chain length of at least 3 saccharide units, namely to initiate foam formation. Remarkably, the effect is limited to these glycosylated globular proteins only, while those involving a mono- or disaccharide such as the lactosylated whey protein which is the subject of WO-A-00/18429, appear to be unsuitable to function as foam initiator only. While these systems may form foams, their surface energy contribution makes them insensitive for replacement by more desirable surfactants.

The effect is all the more surprising, since the conjugates have only a limited impact on the thermodynamic surface tension of the system, widely appreciated as being the driving force behind foaming. Beforehand, one would thus not expect the conjugates to provide a beneficial effect on foaming at all. Still, it is the inventors' findings that the conjugates of the invention form a first interfacial layer which then allows other, conventional surfactants to stabilize a foam. Although the inventors do not wish to be tied down to any theory underlying the invention, it is their belief that it is due to the steric effects initiated by the conjugates at the interface: due to the special configuration the conjugates of the invention adopt at the interface, a relatively diffuse packing of conjugates is formed, thus explaining the limited impact on surface tension of the layer. However, the less dense interfacial layer then allows other, conventional surfactants to penetrate more easily to reach the interface and deplete the original conjugates from the interface. For that purpose, the sugar-part of the conjugates requires a certain length in order to avoid a too dense packing of globular proteins at the interface, which would inhibit the subsequent depletion step. It is found that lactosylated whey protein forms a too dense packing, thus creating an insurmountable energy barrier for the desired foamers to do their work at the surface.

The intended use of the conjugates according to the present invention is restricted to foam initiation, i.e. the ease and extent of foam formation, not to be confused with foam stabilization, i.e. the persistence of foam during the time. Hence, the conjugates are susceptible to be replaced from the surface by conventional surfactants.

### DETAILED DESCRIPTION OF THE INVENTION

The invention thus pertains to the use of globular protein-oligosaccharide conjugates for foam initiation in a foodstuff, wherein the globular protein is glycosylated with an oligosaccharide containing at least three monosaccharide units.

A "conjugate" is herein understood to mean a compound consisting of a protein and one or more reducing carbohydrates, the carbohydrates being bound to the protein via a covalent bond. This covalent bond will as a rule be formed between an ε-amino group of a lysine side chain of the protein and the aldehyde group of the carbohydrate. The formation of such a covalent bond is known as the first step in the Maillard reaction, also referred to as a glycosylation step. Obviously, conjugates are not to be confused with coacervates of proteins (or peptides) and (oppositely) charged polysaccharides, forming electrostatically governed complexes, or (enzymatically) cross-linked protein-polysaccharide complexes. For instance, phenolic saccharides such as taught in WO-A-2006/106809 do not form part of the invention.

The conjugates or Maillard products of the invention may be produced using glycosylation processes disclosed in the art. For instance, WO-A-00/18249 describes a process whereby a whey protein is glycosylated by storing powdered whey protein in an environment whose moistness and temperature and controlled. In WO-A-06/036059, a reaction mixture is prepared from water, protein and reducing carbohydrate, allowing the protein and carbohydrate to react in the reaction mixture, preferably at elevated temperatures, of about 30 - 70 °C, provided that the incubation temperature is controlled well below the protein denaturation temperature, preferably at least 5 °C, more preferably at least 10 °C below the protein denaturation temperature. A denaturated protein would be difficult to replace at the interface, thus undermining the only temporary foam initiation propensity according to the invention. The skilled person will be able to determine suitable reaction conditions with general knowledge of the art.

It is preferred to prepare the Maillard products in a dry form over "aqueous dissolved"-routes known in the art, since the dry-way method appears to have a less damaging effect on the structural integrity compared to heat treatment in solution. Moreover, reproducibility is also improved using dry state Maillardation. A suitable recipe is given in Broersen et al. "Glycoforms of beta-lactoglobulin with improved thermostability and preserved structural packing" Biotechnology and Bioengineering, 86 (2004) pp 78-87.

Preferably, the reaction conditions are chosen such that a protein-carbohydrate conjugate with a glycosylation degree (average number of carbohydrate groups attached per mole monomer of protein x 100 %) of at least 30 % is formed, more preferably at least 40 %, as determined by means of the OPA method. This analysis method is described in the aforecited Broersen et al. publication.

In short, the glycosylation degree is determined indirectly by a chromogenic assay, based on the specific reaction between ortho-phtaldialdehyde (OPA) and free primary amino groups in proteins. In the presence of N,N-dimethyl-2-mercaptoethyl-ammoniumchloride (DMA) these amino groups react to alkyl-iso-indole derivatives that show absorbency at 340 nm.

Preferably, the glycosylation degree is up to 100 %. From practical considerations (time and cost of preparation) a glycosylation degree of 90 % or less, in particular less than 70 % is particularly preferred.

"Globular proteins" is used herein in its art-recognized meaning and includes proteins that have a globular domain. For the purpose of glycosylation it is required that the protein contains at least one solvent-exposed lysine end group. Examples of suitable globular proteins include soy protein, conalbumin, bovine serum albumin (BSA), hemoglobin, ovalbumin, alpha-chymotrypsinogen A, alpha-chymotrypsin, trypsin, trypsinogen, beta-lactoglobulin, myglobin, alpha-lactalbumin, lysozyme, ribonuclease A, cytochrome c, etc.. In a preferred embodiment, the globular protein is a food protein. The protein may be of vegetable or animal origin, such as for instance egg protein, milk protein, gelatine, collagen, serum albumin. It is particularly preferred that the globular protein is selected from the group consisting of whey protein, or its concentrate (WPC) or isolate (WPI), soy protein, beta-lactoglobulin, alpha-lactalbumin, bovine serum albumin and ovalbumin.

As addressed above, the reducing carbohydrate-part of the conjugate, in particularly the length of the carbohydrate, plays an essential role in the context of the invention. The interfacial depletion effect is only achieved if the reducing carbohydrate is an oligosaccharide, i.e. a polysaccharide having a chain length of 3 - 10 saccharide units, preferably up to 8 saccharide units. In practice, the conjugates often comprise a mixture of oligosaccharides with different lengths, wherein a majority of the oligosaccharides preferably have a chain length of 3 - 5 saccharide units.

A conjugate prepared from a mono- or disaccharide would not induce the steric effect at the interface strived for, or at least not to an extent that it would promote subsequent depletion. Evidence is given in the accompanying examples. Therefore, it is preferred that mono- and disaccharides are present in an amount less than 15 %, preferably at most 10 %, based on the total carbohydrate content (used for the formation of the conjugate).

From practical considerations, such as glycosylation rate considerations, preferably at least the greater part of the oligosaccharide molecules has a chain length of 4 or higher. For optimum depletion effect it is preferred that the majority of the oligosaccharides has a chain length of less than 10, more preferably less than 8 saccharide units. Such chain lengths may results in conjugates that exhibit too limited propensity to develop sufficient surface pressure. Typically, less than 15 %, preferably less than 10 % of the oligosaccharides has a chain length larger than 10, but preferably less than 20 saccharide units. It is particularly preferred that the oligosaccharides are free from chain lengths beyond 10 saccharide units.

If the oligosaccharide exhibits one or more branches, the above chain length values correspond to the backbone of the oligosaccharide. However, it is particularly preferred that the oligosaccharide is unbranched.

Very suitable are oligosaccharides which are at least substantially built up from galactose, fructose, glucose, lactose units, or combinations thereof. Preferably, these are present in an amount of at least 80 %, more preferably at least 90 % of the total carbohydrate content of the conjugate. Very good results are obtained using oligofructose or fructo-oligosaccharide (FOS).

The afore-described conjugates are found to be successful in initiating foam. Foam initiation is typically characterized in terms of initial foam volume. Advantageously, the initial foam volume may typically be enhanced with more than 10 %, preferably more than 20 %, most preferably more than 30 %, compared to the initial foam volume of the product lacking the conjugates. "Initial" is understood to comprise time periods of less than 30 seconds, more preferably less than 20 seconds after completion of whipping or sparging the foamable product comprising the conjugates.

In this respect, foam initiation in the context of the invention is quite distinct from foam stability. While good results are achieved in terms of foam initiation, the conjugates of the invention hardly promote foam stability. This second feature is essential in order to make it suitable for application in all kinds of products, including foodstuffs, where the foam initiator must in the end be replaced by the desired detergents. Hence, "foam initiation" in the context of the invention could be described as "replacable" foam initiation, provided that the foam initiator susceptible to be depleted from the surface by conventional detergents/surfactants after foam formation. For a good foam initiator it is deemed necessary not to contribute to foam stability, since it is meant to support existing foam systems rather than replace them.

In view of the proposed theory, the "replacable" character is not at all surprising, since the diffuse packing of conjugates is to give easy access to desired detergents, and it is these detergents that determine the rheological properties of the evolving foams over time. The excellent foam initiating properties may be used in any food or non-food application.

Any desired detergents are largely dependent on the intended use, and often these detergents are already for long associated with a certain product, e.g. a foodstuff. The rheological properties of the evolving foams are largely determined by the detergents. It is considered within the ambit of the skilled person to select the best detergent for the product. It is especially preferred that the detergent exhibits an equilibrium water-air surface tension at or above CMC of less than 55 mN/m, which is lower than the equilibrium interfacial pressure achieved by the conjugates, thus providing a driving force for the conjugates depletion step. More preferably, the detergents realize a equilibrium water-air surface tension, preferably less than 50 mN/m, more preferably less than 45 mN/m, thus providing a driving force for the conjugates depletion step. These values are taken at room temperature. Alternatively, the detergent contribution to the surface pressure may be expressed in terms of its capacity to lower the equilibrium water-air surface tension initiated by the conjugates by more than 5 mN/m, more preferably more than 10 mN/m, in particular more than 15 mN/m.

Although the invention may suitably be applied to non-food applications, it is particularly preferred to incorporate the food-grade conjugates of the invention into foodstuffs, where foaming is a desired quality. Beer or mousses are typical examples thereof. The invention thus pertains to a foodstuff comprising the conjugate of the invention.

It is particularly preferred that the foodstuff has a water activity a_{w} of 0.85 or higher. The water activity is the relative availability of water in a substance. It is defined in the art as the vapour pressure of water divided by that of pure water at the same temperature. Therefore, pure distilled water has a water activity of exactly one. The water activity is different from the moisture content (% water) in a food product. The moisture content is the total moisture, that is, the amount of bound plus free water present in the sample, whereas the water activity only provides a measurement of the free moisture and is usually expressed as aw or percentage Equilibrium Relative Humidity (%ERH). The water activity of a food product is the constant relative humidity of the air which can be measured, for instance with a hygrometer, in direct vicinity of the food product when equilibrium between the food product and the surrounding air is established. This final reading is then called %ERH if it is expressed on percentages (0 to 100%) or water activity if it is expressed as values between 0 and 1.0. Methods for water activity determinations are detailed in the official methods of analysis of AOAC International (1995), Method 978.18.

It is preferred that the foodstuff is in semi-liquid or liquid form. The foodstuff is preferably a beverage.

The foodstuff preferably comprises the conjugates of the invention in an amount of 20 - 5000 ppm, more preferably 50 - 2500 ppm, in particular up to 1500 ppm, calculations based on the total weight of the foodstuff. The upper limit is largely determined by the solubility of the conjugates. Precipitation is mostly avoided, in view of customer perception of the foodstuff. Moreover, the foam initiation effect is already observed at very low concentrations, like often is the case for interface-related applications.

For handling and storage purposes, the conjugates of the present invention are preferably provided in a dried form. The skilled person will be able to determine suitable drying conditions, using conventional drying equipment. Suitable methods involve spray-drying and freeze-drying. The dried conjugates may suitable be included in a range of foodstuffs.

The invention thus also pertains to a foam initiation composition or food additive for use in e.g. foodstuffs. The foam initiation composition contains the above-described globular protein-oligosaccharide conjugate, wherein the globular protein is glycosylated with an oligosaccharide containing at least three saccharide units, and wherein the composition has a weight ratio of fat, if present, to said conjugate of less than 1:1, and is preferably free from fat. With fat is herein understood to include oils, and comprises fatty acid glycerides.

The foam initiation composition preferably contains less than 10 wt% water, based on the total weight of the composition, and is preferably in powder form.

If desired, the foam initiation composition may contain one ore more additives that are suitable for use in a foamable foodstuff, in particular the aforedescribed detergent(s).

Preferably, the preparation of the foam intiation composition may involve a step of pasteurization or sterilization.

### EXAMPLES

### Example 1 - preparation of a conjugate

### Materials

N,N-dimethyl-2-mercaptoethyl-ammoniumchloride (DMA) and di-sodiumtetraboratdecahydrat (Borax) were purchased from Merck. Sodium dodecylsulphate (SDS) was obtained from Serva and ortho-phthaldialdehyde (OPA) was purchased from Sigma. Raftilose (oligo-fructose or fructose-oligo-saccharide (FOS)) was produced by the partial enzymatic hydrolysis of chicory inulin, and was provided by Orafti (Wijchen, The Netherlands). The molecular mass of FOS varied between 180-1260 Da (mono- to heptamers) with the following distribution as determined by mass spectrometry: 5% 180 Da, 5% 360 Da, 27% 540 Da, 27% 720 Da, 18% 900 Da, 13% 1080 Da, and 5% 1260 Da. So, the ensemble-averaged degree of oligomerization is 4.1 units. Milk whey beta-lactoglobulin was isolated and purified (>98% purity) from fresh bovine milk (type A-B ratio 60:40) using the protocol as described in de Jongh, H.H.J.; Groneveld, T.; de Groot, J. J.Dairy Sci.(2001) 84, 562-571, where solely mild isolation conditions were applied. Ovalbumin was isolated and purified from fresh henn eggs using a protocol as described in Kosters, H.A.; Broersen, K.; de Groot, J.; Simons, J.W.F.A.; Wierenga, P.A., de Jongh, H.H.J. Biotechn. Bioeng. (2003) 84, 61-70. Whey protein isolate (WPI) Bipro^{™} was purchased from Davisco Foods International Inc. (Le Sueur, MN, USA). Beta-casein was obtained from Sigma. All other chemicals used were of analytical grade.

### Formation of conjugates

The details of the modification procedure have been described in the aforementioned publication by Broersen. Freeze-dried protein was solubilized in demineralized water and mixed with a FOS-solution in demineralized water at the weight ratio 1:1 to give a final molar ratio of FOS relative to the number of primary amino groups on the protein of about 2. The pH of the mixture was then adjusted to 7.0 or 8.0 using NaOH. The solution was subsequently frozen at -20°C and lyophilized at 50 mbar at -50°C for 48 hours. The dry powder mixture was then incubated at 60°C at a relative humidity of 65% (exposed to a saturated NaNO₂ solution). The incubation was carried out for 12 up to 78 hours. Next, demineralized water was added until all material was dissolved and the samples were subsequently extensively dialyzed (membrane cut-off 12-14kDa) against demineralized water at 4°C. Finally, the material was freeze-dried and stored at -20 °C till further use. Prior to each experiment the material was checked for the degree of modification to ensure the stability of the product.

The foregoing was applied to milk whey beta-lactoglobulin (βLg), chicken egg ovalbumin (OVA) and whey protein isolate.

### Determination of protein concentration

In each case, the protein concentrations were determined spectrophotometrically by measuring the absorbance at 280 nm, using an extinction coefficient of 0.96 ml.mg⁻¹.cm⁻¹ for both native and modified protein (beta-lactoglobulin or OVA or WPI). In all experiments the number of native and modified protein molecules was kept comparable by calibration of the samples on their absorption at 280 nm.

### Degree of modification; OPA analysis

The degree of modification (DM) is defined as the number of moles FOS attached per mole monomer of protein. The DM was determined indirectly by a chromogenic assay described in Church, F.C.; Swaisgood, H.E.; Porter, D.H.; Catignani, G.L. J. Dairy Sci. (1983) 66, 1219-1227, based on the specific reaction between OPA and free primary amino groups in proteins. In the presence of DMA these amino groups react to alkyl-iso-indole derivatives that show absorbency at 340 nm. In short, the OPA-reagent was prepared by dissolving 40 mg OPA in 1 ml methanol, followed by the addition of 25 ml 0.1 M Borax buffer, 200 mg DMA and 5 ml 10% SDS. Finally, the volume was adjusted to 50 ml with demineralized water. A quartz cuvette was filled with 3 ml of this reagent and the absorbance at 340 nm was determined. Subsequently, 15 µl of a protein solution was added and after an incubation time of 30 min at room temperature, the absorbance at 340 nm was determined again. A calibration curve of L-Leucine was obtained by preparing samples with a final concentration range from 6.6 to 95.0 µM L-leucine. All measurements were performed in triplicate.

The conjugates prepared above had a typical degree of modification of about 40%, implying that in the case of beta-lactoglobulin about 7-8 FOS-groups were covalently attached to the protein, whereas in the case of ovalbumin this was almost the double number. The average degree of modification of proteins in the complex mixture of WPI was comparable to that of beta-lactoglobulin.

### Phenol-sulfuric acid reaction assay

Total fructose content of the conjugates was determined using the phenol-sulphuric acid reaction as described in detail in Dubois, M.; Gilles, K.A.; Hamilton, J. K.; Rebers, P.A.; Smith, F. Anal. Chem. (1956) 28, 350-354. Fructose was used as standard. The reproducibility of the determination was within about 5%. This analysis confirmed the results obtained using above-mentioned procedure for determination of the degree of modification.

### Example 2

The functional behavior of these conjugates was tested in two ways. First, the ability to become displaced from the interface was tested by monitoring the surface tension of an air-water interface. Secondly, it was tested whether the addition of the conjugate did not abolish the foaming capacity and could even improve foam formation in poor foaming systems.

### Example 2a - Displacement from the interface; competition with Datem

The presence of the native and FOS-modified protein at interfaces was monitored using automated drop tensiometry. This technique monitors the changes in surface pressure in time. The in food-industrial applications frequently used surfactant Datem (Diacetyl Tartrate Ester of Monoglyceride, Kerry Bio-science, The Netherlands) was selected to demonstrate the ability to displace materials from the interface.

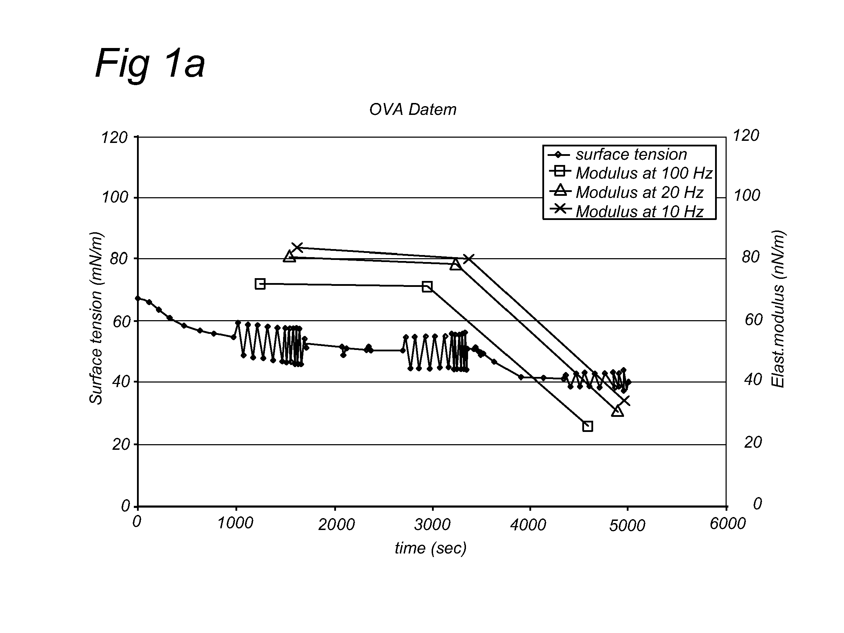

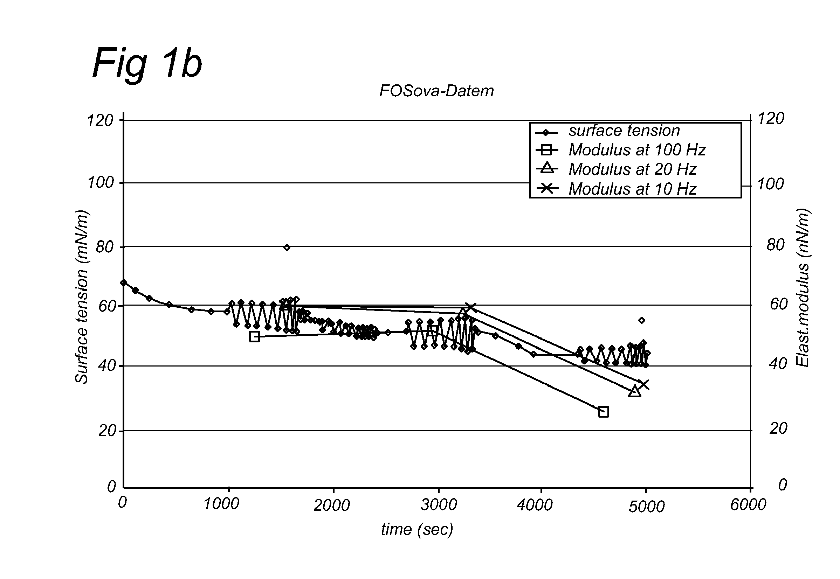

Figure 1 shows the reduction of the surface tension in the first 1000 seconds caused by adsorption of native (Figure 1A) and FOS-modified (Figure 1B) ovalbumin, wherein at t=0 a droplet was created and let to equilibrate for 1600 sec. Then the inside of the droplet was rinsed with buffer (for 600 sec) and at t=3200 seconds the droplet was rinsed with a Datem solution. The wrinkles represented the measurement of the modulus at three different frequencies. The lines are guides to the eye.

It can be seen that evolution of the surface tension proceeds with a similar kinetics for the two proteins, indicating that the coupling of steric antennas onto the protein surface does not affect the adsorption kinetics significantly. The equilibrium surface tension for the conjugate is higher (58 mN/m) and the modulus is significantly lower (-60 mN/m) compared to the native protein (resp. 52 and 80 mN/m). The lower modulus is explained by the larger not-covered space in the surface layer that makes that compression of the layer does not directly lead to hard particle-particle interactions leading to high surface pressures. Rinsing of the droplet (between 1500 and 3200 sec) does not change the modulus, illustrating that the rheological properties of the formed surface layers are in equilibrium. Introduction of Datem into the system (at 3200 sec) caused for both the native and the FOS-modified protein that the surface tension was lowered by another 10 mN/m where also in both cases the modulus reached values that are typical for Datem at air-water interfaces (24-34 mN/m).

Clearly, FOS-OVA can be displaced from the interface by a surfactant that can develop a much higher surface pressure, just like the native protein.

The same experiment was repeated with beta-casein as the replacing agent, instead of Datem. Beta-casein is a renowned protein-surfactant that has a typical equilibrium surface tension of about 52 mN/m, and in that way comparable to other globular proteins like beta-lactoglobulin or ovalbumin, but has a typical low modulus due to its intrinsic structural flexibility.

Results for surface tension behaviour were similar to those reported for Datem. Again, in both situations beta-casein was able to alter the surface layer properties. The major difference lies here in the observation that in the case of FOS-OVA the modulus got as low as 38-45 mN/m after rinsing the air-bubble with beta-casein solution. Pure beta-casein surface films have moduli in the range of 30-40 mN/m. Interestingly, for native OVA the modulus also decreased after the introduction of beta-casein into the system, but the modulus was reduced to 60-70mN/m, well above the values that are expected when beta-casein would be the main component present at the interface.

From this study it has to be concluded that the surface functional properties are largely retained when a pre-established surface layer of ovalbumin is formed first before it becomes exposed to a beta-casein-solutions. In the case of FOS-conjugated material beta-casein is able to become the dominant protein in the surface layer.

### Example 2b - Foam capacity of poor foaming systems

In the experiments described above it was shown that the FOS-conjugate can be displaced from the interface by other components, unlike the native protein that can only be displaced by components that can gain more energy by adsorption leading to higher surface pressures. This example demonstrates that the addition of FOS-conjugates to poor foaming systems does lead to enhanced foam capacities.
To this end two different systems were tested: (1) a caseinate-solution, and (2) a biologically brewed beer.

### Foaming of caseinate solutions:

Typically a 0.05% sodium caseinate-solution was prepared in a 250 ml in a measuring cylinder of 250 ml (pH 6,8) and subsequently sparged with a moderate oxygen flow of 50 ml/min using a small pore sparging-stone at the bottom of the cylinder. Within 60 minutes the maximal foam height was obtained. The caseinate-concentration was chosen such that under these conditions only marginal foam was established.

The addition of 0.05% FOS-WPI (whey protein isolate that was glycolsyated using the above described procedure with FOS to an average degree of modification of 40% of the available lysines) clearly demonstrates an improved foam height. Also, the stability of the formed foam appeared to be higher.

### Foaming of beer:

To establish the impact of modification by FOS of added proteins to a more complex system, the foam capacity of a biological brewed beer was tested (trade name: Limburgs Land Pilsner, 100% ekologisch (B.V.Gulpener Bierbrouwerij. Alc 5% vol. Bier Cat.I)). Prior to use first the carbondioxide-content was largely reduced by incubation the beer overnight in a beaker under continuous stirring using a magnetic stirrer at room temperature. Then 15 ml of de-gassed beer was poured into a foam tube (50 mL) containing a porous stop at the bottom that could be connected to an intubation tube with carbodioxide-gas. A flow rate of 20 ml/min was used to sparge the fluid for 20 sec. The foam height was then monitored in time.

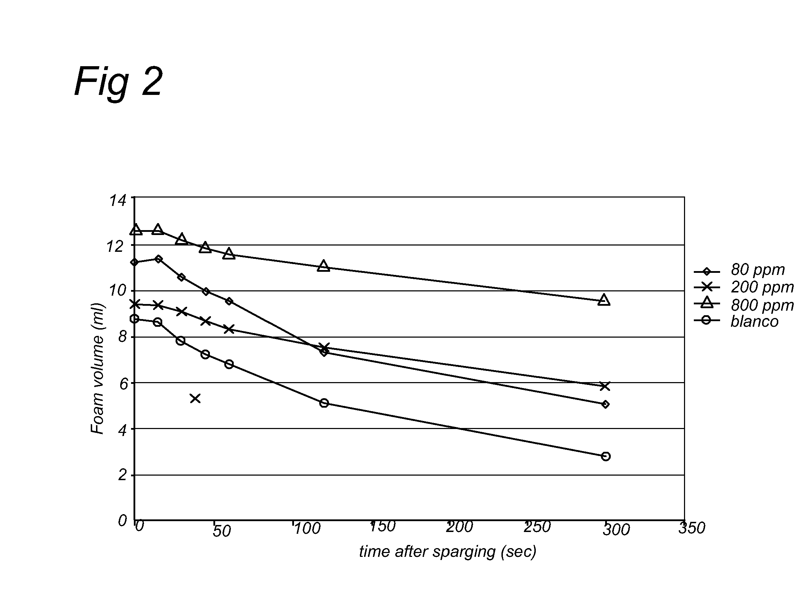

Figure 2 shows the results for the beer containing no FOS-WPI and three samples with increasing concentrations (70, 200 and 800 ppm) of FOS-WPI. The lines are guides to the eye. It can be clearly observed that the initial foam height increases with increasing FOS-WPI, but the kinetics of foam deterioration is not significantly affected. In contrast, when non-modified WPI was added in these concentrations a similar increase in initial foam volume was observed, but the foam volume appeared more stable in time. Again this example shows that the FOS-conjugates have the ability to act as good foam initiator, but are, in contrast to non-modified forms, susceptible to become depleted from he interface by other constituents.

### Comparitive example I

The development of a surface pressure in time upon creation of an essentially protein-free air-water interface has been studied both using the automated drop tensiometer (ADT, ICT (France)). The interfacial tension was determined by means of drop shape analysis of a bubble of air formed within a cuvette containing 0.035 mg/ml of native or modified βLg solution in 20 mM phosphate buffer at pH 7.0. The bubble was illuminated by a light source and its profile was imaged and digitized by a CCD-camera and a computer. The profile was used to calculate the interfacial tension using Laplace's equation.

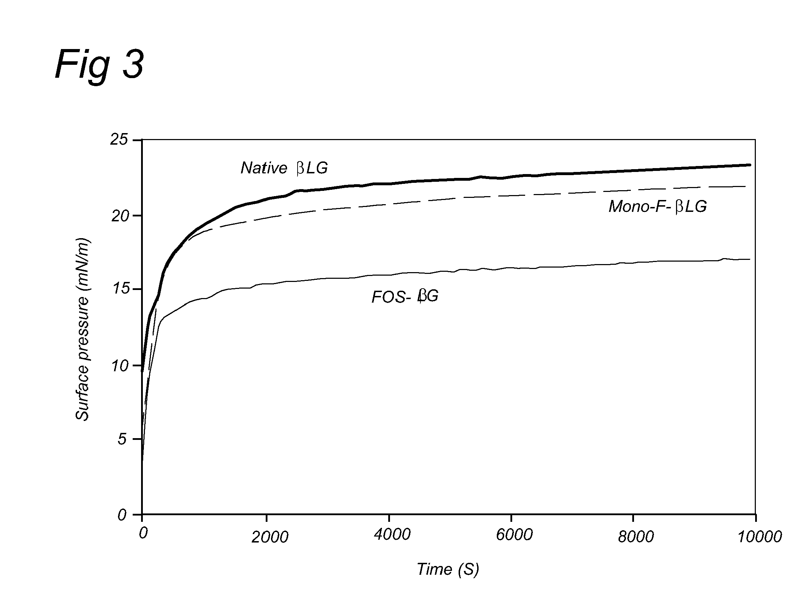

Figure 3 shows typical evolution-profiles of the surface pressure (72 mN/m minus the detected surface tension) in time as monitored by the automated drop tensiometer. The absence of the so-called lag-phase for both the native and FOS-βLg, indicates that on a second time-scale the adsorbed amounts reaches levels above 1 mg/m², a typical value for proteins required to exert a significant surface pressure. After about 1500 sec the change in surface pressure levels off, but in both cases still increases slowly in time. It is evident, however, that the surface pressure in 'equilibrium' of the FOS-βLg (15 mN/m±2 (based on 5 different experiments)) is significantly lower than that for the native protein (23 mN/m ±2 (based on 5 different experiments)).

For comparison, βLg was also modified with mono-fructose instead of FOS, with the same degree of modification (results not shown). The equilibrium surface pressure of this mono-fructosylated material was only marginally lower than that of native βLg, about 22 mN/m (Figure 3).

Using ellipsometry, the adsorbed amount can be monitored in time (results not shown). Again it can be seen that the rate of accumulation of material at the interface is comparable between native and FOS-modified protein, but for the modified material the surface load (in mg/m²) is always significantly higher than for the native protein. The maximum amount of adsorbed native βLg reached after 1.5 hours was found to be about 1.4 mg/m² while for FOS-βLg was 1.9 mg/m². Analysis of the data using manufacturer supplied software illustrated that for the modified material the surface layer thickness was at any time point about two times larger than that found for the native protein. In order to allow such analysis the refractive index of both that native and FOS-βLg were determined using a refractometer on a 100 mg/ml protein solution, and appeared not significantly different (results not shown). Analysis of a sample that was modified with mono-fructose showed comparable surface layer properties as the native protein (not shown).

This example clearly demonstrates that modification with mono-fructose does not yield conjugates with lower equilibrium surface pressure compared to non-modified material, whereas FOS-protein yields material that can be displaced by other constituents like proteins, based on their significantly lower equilibrium surface pressure.

## Claims

1. Use of a globular protein-oligosaccharide conjugate for replaceable foam initiation in a foodstuff, wherein the globular protein is glycosylated with an oligosaccharide containing at least three monosaccharide units.

2. Use according to claim 1, wherein said foodstuff has a water activity a_{w} of 0.85 or higher.

3. Use according to any one of the preceding claims, wherein said oligosaccharide contains 3 - 10 saccharide units, preferably up to 8 saccharide units.

4. Use according to any one of the preceding claims, wherein said oligosaccharide is unbranched.

5. A foam initiation composition containing a globular protein-oligosaccharide conjugate, wherein the globular protein is glycosylated with an oligosaccharide containing at least three saccharide units, said composition having a weight ratio of fat, if present, to said conjugate of less than 1:1, and is preferably free from fat.

6. The foam initiation composition according to claim 5, containing less than 10 wt% water, based on the total weight of the composition, said composition preferably being in powder form.

7. A foamed foodstuff containing the foam initiation composition according to claim 5 or 6, further containing a detergent exhibiting an equilibrium water-air surface tension at or above CMC of less than 55 mN/m.

8. The foamed foodstuff according to claim 7, having a water activity a_{w} of 0.85 or higher.
